# EUROPÄISCHE PATENTSCHRIFT

(11) **EP 3 084 889 B1**
(45) Veröffentlichungstag und Bekanntmachung des Hinweises auf die Patenterteilung: **06.12.2017**
(21) Anmeldenummer: 14809037.6
(22) Anmeldetag: 09.12.2014
(51) Int. Cl.: H01R 4/48, H01H 9/12, H01R 4/64, H01R 9/26, H02B 1/052

(54) **SYSTEM VON ELEKTRONIKGEHÄUSE UND SCHUTZKONTAKTANORDNUNG**
SYSTEM COMPRISING ELECTRONICS HOUSING AND EARTHING CONTACT ASSEMBLY
SYSTÈME COMPOSÉ D'UN BOÎTIER ÉLECTRONIQUE ET D'UN AGENCEMENT DE CONTACT DE PROTECTION

(30) Priorität: 17.12.2013 DE 102013114261
(43) Veröffentlichungstag der Anmeldung: 26.10.2016
(73) Patentinhaber: Eaton Electrical IP GmbH & Co. KG, 12529 Schönefeld (DE)
(72) Erfinder: KNOERRCHEN, Oliver, 50858 Köln (DE); STANKE, Stephan, 53359 Rheinbach (DE); GROßE-ONNEBRINK, Ulrike, 53757 Sankt Augustin (DE)
(74) Vertreter: Eaton IP Group EMEA
(86) Internationale Anmeldenummer: PCT/EP2014/077009
(87) Internationale Veröffentlichungsnummer: WO 2015/091098

(56) Entgegenhaltungen:
- DE-A1- 19 727 454
- DE-A1-102006 059 826
- FR-A1- 2 650 709

## Beschreibung

Die Erfindung betrifft ein System von Elektronikgehäuse und Schutzkontaktanordnung für ein elektromechanisches Schaltgerät zum Aufsetzen auf eine Tragschiene, wobei im Elektronikgehäuse die Schutzkontaktanordnung montierbar ist.

Häufig bestehen derartige Elektronikgehäuse aus einem Gehäuseoberteil und einem auf eine Tragschiene aufrastbaren Gehäuseunterteil (zum Beispiel DE 202006006615 U1). Hier weist das Gehäuseoberteil Anschlüsse für elektrische Leitungen auf, wobei die Anschlüsse über Steckerkontakte mit dem Gehäuseunterteil verbunden sind. Das Sockelunterteil des Elektronikgehäuses ist für die Aufnahme von mehreren Leiterplatten ausgebildet.

Es sind weitere Anordnungen von derartigen Elektronikgehäusen bekannt, bei denen ein Schutzleiterkontakt (auch mit PE-Kontakt bezeichnet) die Tragschiene kontaktierend vorhanden ist (DE 102006059826 A1). Der Schutzleiterkontakt wird vor dem Aufsetzen des Elektronikgehäuses in einen Montageschacht eingeschoben und ein Kontaktteil kontaktiert die Tragschiene. Bei diesem Schutzleiterkontakt liegen insbesondere die elektrischen Kontaktelemente außerhalb des Gehäuses und sind anfällig für Schmutz und Beschädigung. Ein weiterer Nachteil liegt darin, dass die Kontaktelemente mit relativ dünner Blechstärke ausgebildet sind, womit sie empfindlich sind gegen Kraftaufwand oder Beschädigung. Der Schutzleiterkontakt ist nicht montierbar, wenn das Elektronikgehäuse auf einer Tragschiene aufsitzt. DE 197 27 454 A1 offenbart ein System gemäß dem Oberbegriff von Anspruch 1.

Der vorliegenden Erfindung liegt die Aufgabe zugrunde, ein System von Elektronikgehäuse und Schutzkontaktanordnung anzugeben, bei dem die Schutzkontaktanordnung in das Innere des Elektronikgehäuses einführbar ist und elektro-sicher gelagert ist.

Diese Aufgabe wird durch die Merkmale des Hauptanspruchs gelöst. Weiterführende Ausgestaltungen sind in den Unteransprüchen angegeben.

Die erfindungsgemäße Schutzkontaktanordnung ist zur Montage in ein mit einem Montageschacht nach der Erfindung ausgestatteten Elektronikgehäuse vorgesehen. Die Schutzkontaktanordnung ist bei einem auf der Tragschiene aufsitzendem Elektronikgehäuse in den Montageschacht einschiebbar. Der Montageschacht über eine Montageöffnung von außen zugänglich. Elektronikgehäuse können mit der erfindungsgemäßen Schutzkontaktanordnung nachgerüstet werden, in denen ein Montageschacht ausgebildet ist, unabhängig von einer Positionierung der Schutzkontaktanordnung auf einer Tragschiene. Hierbei kommt der Kontakt der Schutzkontaktanordnung federnd mit der Tragschiene in Berührung.

Ein Merkmal der Erfindung ist, dass der Montageschacht für die Schutzkontaktanordnung im Elektronikgehäuse im Bodenbereich randnah an der Längsseite des Elektronikgehäuses ausgebildet und von den Gehäuseflächen, insbesondere von den Seitenwänden, des Elektronikgehäuses umschlossen ist. Allein ein schmaler zur Tragschiene gerichteten Schlitz, nicht viel breiter als die Breite des Messerkontakts, ist an der Unterseite als Öffnung vorhanden.

Ein Vorteil der Erfindung liegt darin, dass die Nachrüstung der Schutzkontaktanordnung werkzeuglos im Grundgerät erfolgen kann. Beim Aufsetzen der Schutzkontaktanordnung erfolgt automatisch eine Erdverbindung über die metallische Tragschiene. Die Verbindung zwischen Schutzkontakt und der Tragschiene ist elektro-sicher, da die Schutzkontaktanordnung im Gehäuse versenkt ist.

Mindestens eine Leiterpatte kann im Elektronikgehäuse in paralleler Lage zu den beiden längeren Außenwänden des Elektronikgehäuses angeordnet sein. Um ein ungewolltes Abheben eines Elektronikgehäuses von der Tragschiene zu verhindern, kann der Bodenbereich oder das Sockelteil des Elektronikgehäuses eine Verriegelung aufweisen, mittels der das Sockelteil und damit das Elektronikgehäuse insgesamt auf der Tragschiene lösbar verbindbar ist.

Im einzelnen gibt es nun eine Vielzahl von Möglichkeiten, das vorgeschlagene System von Elektronikgehäuse und Schutzkontaktanordnung auszugestalten und weiterzubilden. Dazu wird verwiesen sowohl auf die in den Ansprüchen formulierten Merkmale, als auch auf die Beschreibung bevorzugter Ausführungsbeispiele in Verbindung mit der Zeichnung. Einzelne Merkmale können einzeln oder gemeinsam - soweit technisch sinnvoll - miteinander kombiniert sein.

Der Montageschacht kann relativ schmal ausgebildet sein, vorzugsweise mit einer Breite von höchstens einem Drittel der Schmalseite des Elektronikgehäuses. Der Montageschacht hat eine zu einer Schmalseite des Elektronikgehäuses weisende Montageöffnung. Im Montageschacht können Führungsnuten und auch Rastelemente vorhanden sein. Mit den Rastelementen kann die montierte Schutzkontaktanordnung im Montageschacht verrasten.

Die Schutzkontaktanordnung und der Montageschacht sind derart ausgebildet, dass eine Verschwenkung der Schutzkontaktanordnung um eine parallel zur Schmalseite liegende Achse möglich ist und eine federnde Belastung und Kontaktierung in Richtung auf die Tragschiene über eine im Bodenbereich montierbare Feder erfolgt. Hierfür sind Kontaktteil und Kontaktgehäuse der Anordnung starr miteinander ausgebildet. Im Bodenbereich können Halteelemente oder ähnliches für eine Feder vorhanden sein. Die Feder erzeugt die Belastung der montierten Schutzkontaktanordnung in Richtung auf die Tragschiene. Eine solche Feder kann eine Schraubenfeder oder eine Blattfeder oder ähnliches sein.

Vorzugsweise kann ein Halteelement für eine Feder ein im Bodenbereich ausgebildeter und zur Tragschiene gerichteter Hohlraum sein.

Das Elektronikgehäuse kann mehrteilig, insbesondere aus Oberteil und Sockelteil bestehend, ausgebildet sein. Der Bodenbereich kann Teil eines auf die Tragschiene aufrastbaren Sockelteils des Elektronikgehäuses sein. Die Mehrteiligkeit kann darin bestehen, dass vorhanden ist: ein den Bodenbereich umfassendes Sockelteil, ein aus zwei Seitenteilen aufgebautes Oberteil und ein die Seitenteile auf ihrer vom Sockelteil wegweisenden Oberseite verrastender Deckel.

Je nach Verwendung einer der schon erwähnten Federn, die eine federnde Belastung des Kontaktteils ermöglichen sollen, kann eine solche Feder ebenfalls vor Aufrasten des Elektronikgehäuses im Bodenteil eingebracht werden.

Die Schutzkontaktanordnung ist dreiteilig ausgebildet. Die Schutzkontaktanordnung umfasst ein als Messerkontakt ausgebildetes Kontaktteil, eine auf dem Kontaktteil befestigbare Kontaktbuchse und ein aus Isolierstoff ausgebildetes, die Kontaktbuchse aufnehmendes Kontaktgehäuse. Das Kontaktteil wird vorzugsweise durch Stanzen und Biegen aus einem leitfähigen Flachmaterial hergestellt.

Das Kontaktteil aus Flachmaterial ist einstückig mit einer Klemmenaufnahme ausgebildet. Die Klemmenaufnahme ist als Rastzapfen zur Aufnahme einer Kontaktklemme ausgebildet. Das flächige Material weist einerends - am freien Ende des Kontaktteils - den Messerkontakt und andernends - gegenüber dem Messerkontakt liegend - die Klemmenaufnahme auf.

Der Messerkontakt sollte eine in Richtung zur Tragschiene ausgebildete Schneide als Kontaktfläche mit halbkreisförmiger Ausbildung aufweisen. Die Kontaktfläche des Messerkontakts kommt bei eingeschobener Schutzkontaktanordnung in der Mitte der Längsseite des Elektronikgehäuses zu liegen.

An dem dem Messerkontakt abgewandten Ende des Kontaktteils ist ein Rastzapfen zur Aufnahme der Kontaktklemme ausgebildet. Der Rastzapfen ist in einer Ebene angeordnet, die parallel zu der Ebene liegt, in der sich der Messerkontakt erstreckt.

Die Kontaktklemme wird so auf dem Rastzapfen aufgeschoben, dass Kontaktteil und Kontaktklemme unverlierbar miteinander verrastet sind.

Die Kontaktbuchse dient dem Einführen eines elektrischen Leiters, als Litze oder Stecker zur Schutzkontaktierung mit der Tragschiene. Die Kontaktbuchse wird von dem Kontaktgehäuse aus Isoliermaterial umschlossen.

Wie schon erwähnt, ist das freie Ende des Kontaktteils des Messerkontakts bevorzugt gegenüber der abgewinkelten Klemmenaufnahme starr ausgebildet. Die federnde Beaufschlagung erfolgt durch eine im Bodenbereich eingebrachte Feder, vorzugsweise durch eine Schraubenfeder.

In einer alternativen Ausbildung, bei der Kontaktteil und Kontaktgehäuse nicht starr miteinander ausgebildet sind, kann das freie Ende des Kontaktteils gegenüber der Klemmenaufnahme federnd ausgebildet sein. In dieser Ausbildung handelt es sich also um eine selbstfedernde Anordnung, die keiner weiteren Feder im Bodenteil des Elektronikgehäuses bedarf. Das Kontaktteil federt gegen das starre Kontaktgehäuse. Die Verschwenkbarkeit der Schutzkontaktanordnung im Montageschacht ist in diesem Fall nicht vorgesehen.

In der Zeichnung wird ein bevorzugtes Ausbildungsbeispiel der Erfindung gezeigt. Darin wird dargestellt:
Fig. 1A und 1B: Beispiel eines zweiteiligen Elektronikgehäuses,
Fig. 2A und 2B: Schnitt durch ein den Bodenbereich bildendes Sockelteil,
Fig. 3: die Schutzkontaktanordnung in Seitenansicht und
Fig. 4: eine Explosionszeichnung der Schutzkontaktanordnung.

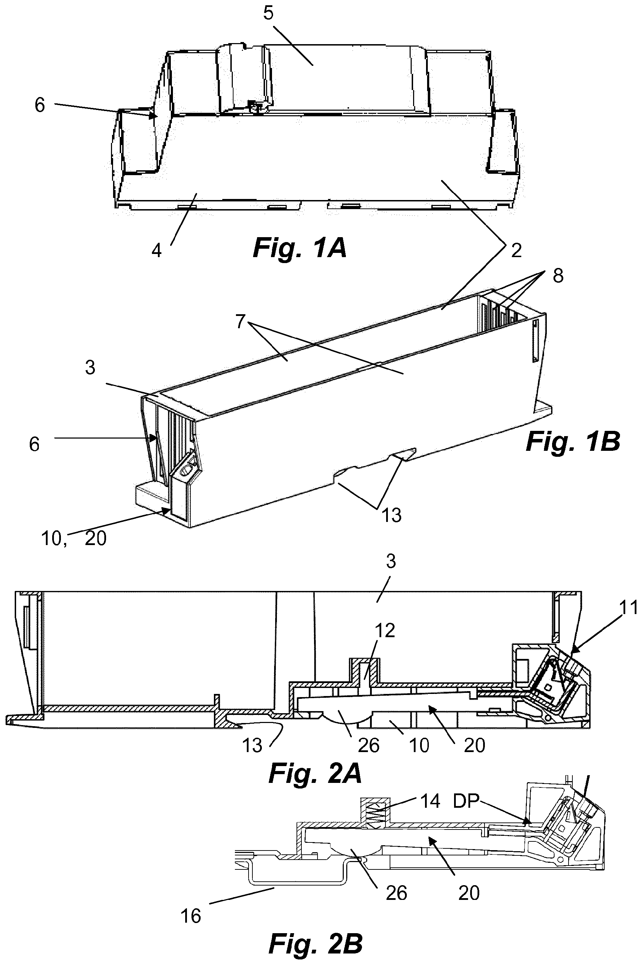

Das in Fig. 1A (und 1B) dargestellte Elektronikgehäuse 2 ist als Beispiel für ein mehrteiliges Gehäuse zu verstehen, welches auf eine Tragschiene 16 aufgerastet werden kann. Die Art des Elektronikgehäuses ist für die Erfindung nicht entscheidend. Wesentlich ist, dass im Bodenbereich des Elektronikgehäuses ein im weiteren beschriebener Montageschacht ausgebildet ist. Das Elektronikgehäuse 2 besteht (Figur 1A) aus einem Oberteil 4 und (Figur 1B) aus einem Sockelteil 3. Das Oberteil kann einen Deckel 5 aufweisen. Die Verrastung des Elektronikgehäuses auf der Tragschiene 16 erfolgt mit den Hinterschneidungen 13.

Die Verbindung von Sockelteil 3 und Oberteil 4 kann mittels einer Rastverbindung erfolgen, wozu an den Seitenwänden 7 des Sockelteils 3 entsprechende Rastnasen und im Oberteil 4 dazu korrespondierende Rastöffnungen ausgebildet sind. Die Verrastung zwischen dem Sockelteil 3 und dem Oberteil 4 ist dabei so ausgebildet, dass Sockelteil 3 und Oberteil 4 werkzeuglos miteinander verbunden werden können.

Der Montageschacht 10 hat eine zu einer Schmalseite 6 des Elektronikgehäuses 2 weisende Montageöffnung 11. Ansonsten ist der Montageschacht von den Gehäuseflächen, insbesondere von den Seitenwänden 7 des Elektronikgehäuses umschlossen. Allein ein schmaler zur Tragschiene gerichteten Schlitz, nicht viel breiter als die Breite des Messerkontakts, ist an der Unterseite als Öffnung vorhanden. Im Montageschacht können Führungsnuten zur Einführung der Schutzkontaktanordnung vorhanden sein.

Der Montageschacht 10 liegt seitlich versetzt und randnah an der Längsseite des Bodenbereichs des Elektronikgehäuses 2. Er hat etwa die Breite eines Drittels der Schmalseite 6 des Elektronikgehäuses 2 (siehe Fig. B). Parallel zum Montageschacht befinden sich Leiterplattenschächte 8 für das Einfügen von Leiterplatten. Es kann somit mindestens eine Leiterplatte vorhanden sein. Zu den Leiterplatten können unterschiedliche Anschlussklemmen gehören. Grundsätzlich sind dabei alle bekannten Typen von Anschlussklemmen mit der Leiterplatte verbindbar, d.h. insbesondere Schraubanschlussklemmen, Zugfederklemmen oder Schenkelfederklemmen.

Die Figuren 2A und 2B zeigen Schnitte durch ein den Bodenbereich bildendes Sockelteil eines Elektronikgehäuses.

Im Bodenbereich (oder in dem Sockelteil) des Elektronikgehäuses ist ein von außen (hier in der Zeichnung von rechts) über eine Montageöffnung zugänglicher Montageschacht 10 vorhanden. Der Montageschacht 10 reicht von der Schmalseite des Bodenbereichs bis etwa zur Mitte der Zone, in der die Tragschiene zu liegen kommt.

In Fig. 2A ist die Anordnung ohne Tragschiene 16 dargestellt. Die Schutzkontaktanordnung 20 ist unter der Wirkung der Feder 14 (siehe Fig. 2B) in Richtung auf die (nicht vorhandene) Tragschiene gekippt.

Die in Fig. 2B gezeigte Schutzkontaktanordnung 20 kontaktiert federnd die Tragschiene 16. Im Bodenbereich ist ein als Federkammer ausgebildeter und zur Tragschiene gerichteter Hohlraum 12 vorhanden. Zur federnden Belastung des Kontaktteils der Schutzkontaktanordnung ist in der Federkammer 12 eine Feder 14 (Schraubenfeder) vorhanden. In einer weiteren bevorzugten Ausführungsform - hier zeichnerisch nicht dargestellt - kann anstelle einer Federkammer mit Feder, eine im Bodenteil oder am Messerkontakt ausgestanzte Blattfeder vorhanden sein, die die Funktion der federnden Beaufschlagung in Richtung auf die Tragschiene übernimmt.

Die Schutzkontaktanordnung 20 ist in dem Montageschacht 10 um einen kleinen Winkel um den Drehpunkt DP schwenk- oder kippbar. Die durch den Drehpunkt DP laufende Schwenkachse liegt parallel zur Schmalseite 6 des Elektronikgehäuses. Mit dieser Beweglichkeit kann die Schutzkontaktanordnung beim Einführen der Schutzkontaktanordnung in das Elektronikgehäuse, bzw. beim Aufschieben des Elektronikgehäuses auf die Tragschiene der federnden Belastung der Feder 14 folgen.

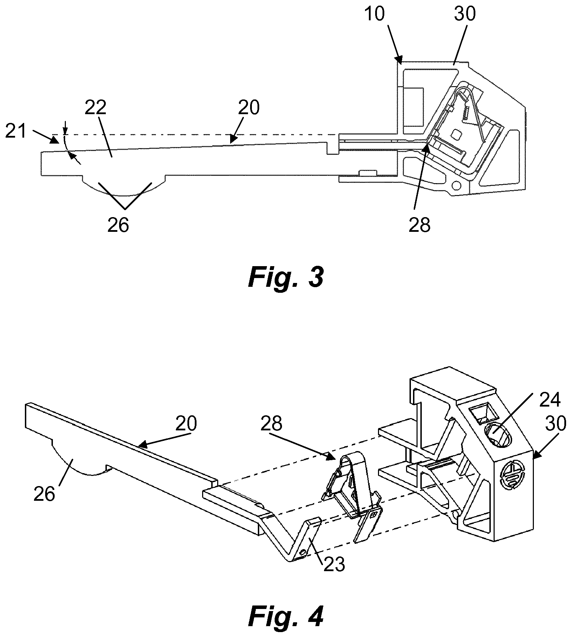

In der Fig. 3 ist die Schutzkontaktanordnung in Seitenansicht dargestellt. Die Schutzkontaktanordnung 20 ist dreiteilig ausgebildet und in Fig. 4 in Explosionszeichnung wiedergegeben. Die Schutzkontaktanordnung zeichnet sich dadurch aus, dass sie ein als Messerkontakt ausgebildetes Kontaktteil 22, eine auf dem Kontaktteil befestigbare Kontaktklemme 28 und Kontaktbuchse 24 und ein aus Isolierstoff ausgebildetes, die Kontaktklemme 28 und die Kontaktbuchse 24 aufnehmendes Kontaktgehäuse 30 umfasst. Das Kontaktteil 22 besteht aus leitfähigem, etwa 2 bis 3 mm dickem Flachmaterial aus Leitermetall (z.B. Blech aus Cu oder Cu-Legierung).

Die Erstreckung des Kontaktteils 22 ist mit einem kleinen Winkel 21 gegenüber einer im Montageschacht waagerechten Lage nach unten abgewinkelt. Hierdurch ist eine Verschwenkung der Schutzkontaktanordnung 20 bei Beaufschlagung durch die in der Federkammer 12 befindliche Schraubenfeder 14 um eine parallel zur Schmalseite 6 liegende Achse möglich. Im Montageschacht hat die Schutzkontaktanordnung entsprechend Spiel für die Bewegung in der Verschwenkung.

Die Kontaktbuchse 24 dient dem Einführen eines elektrischen Leiters, als Litze oder Stecker zur Schutzkontaktierung mit der Tragschiene. Die Kontaktbuchse und die Kontaktklemme 28 werden von dem Kontaktgehäuse 30 aus Isoliermaterial umschlossen.

Das Kontaktteil 22 besteht einerends am ersten - freien Ende - aus einem Messerkontakt 26 und andernends aus einer senkrecht zur Ebene, in der der Messerkontakt liegt, abgewinkelten als Rastzapfen 23 ausgebildeten Klemmenaufnahme. Der Messerkontakt 22 weist eine in Richtung zur Tragschiene ausgebildete Schneide 26 mit halbkreisförmiger Ausbildung auf.

An dem dem Messerkontakt 22 abgewandten Ende des Kontaktteils ist der Rastzapfen 23 zur Aufnahme der Kontaktklemme 28 ausgebildet. Die Kontaktklemme wird so auf dem Rastzapfen aufgeschoben, dass Kontaktteil und Kontaktklemme unverlierbar miteinander verrastet sind.

Das freie Ende des Messerkontakts 22 ist gegenüber der abgewinkelten Klemmenaufnahme starr ausgebildet, was dadurch zum Ausdruck kommt, dass die federnde Beaufschlagung des Messerkontakts 22 mittels der Schraubenfeder 13 zustande kommt.

Gegenüber der in den Figuren dargestellten und beschriebenem starr ausgebildeten Schutzkontaktanordnung kann - in einer weiteren Ausbildungsform der Erfindung - der Messerkontakt gegenüber dem Kontaktgehäuse 30 auch federnd und schwenkbar ausgebildet sein. In diesem Fall ist das Kontaktgehäuse unverschwenkbar in den Montageschacht eingeführt. Eine mit dem Bezugszeichen 14 beschriebene Feder ist nicht notwendig. Die federnde Bewegung des Kontaktteils (Messerkontakt) gegen die Tragschiene wird von dem flächigen, leitfähigen Material des Kontaktteils aufgebracht.

### Bezugszeichen

- 2: Elektronikgehäuse (aus Kunststoff)
- 3: Sockelteil
- 4: Oberteil
- 5: Deckel
- 6: Schmalseite
- 7: Seitenwände
- 8: Leiterplattenschacht
- 10: Montageschacht
- 11: Montageöffnung
- 12: Hohlraum (Federkammer)
- 13: Hinterschneidung
- 14: Feder (Schraubenfeder)
- 16: Tragschiene
- 20: Schutzkontaktanordnung
- DP: Drehpunkt Schwenkachse
- 21: Winkel
- 22: Kontaktteil, Messerkontakt (Flachmaterial)
- 23: Rastzapfen (Klemmenaufnahme)
- 24: Kontaktbuchse
- 26: Kontaktfläche (Schneide)
- 28: Kontaktklemme (Push-In-Klemme)
- 30: Kontaktgehäuse

## Patentansprüche

1. System von Elektronikgehäuse für ein elektromechanisches Schaltgerät (2) und Schutzkontaktanordnung (20),
wobei das Elektronikgehäuse (2) aufsetzbar auf eine Tragschiene gestaltet ist und weiter umfasst
• mindestens einen Leiterplattenschacht (8) zum Einschieben von Leiterplatten,
• Anschlussklemmen oder Steckverbindern zum Anschließen von elektrischen Leitern, wobei die Anschlussklemmen elektrisch mit mindestens einer Leiterplatte verbindbar sind,
• wobei im der Tragschiene (16) zugewandten Bodenbereich des Elektronikgehäuses (2) ein von der Schmalseite (6) des Elektronikgehäuses (2) von außen zugänglicher, innerhalb des Elektronikgehäuses (2) ausgebildeter und parallel zu dem mindestens einen Leiterplattenschacht (8) liegender Montageschacht (10) vorhanden ist, wobei der Montageschacht (10) randnah an der Längsseite des Bodenbereichs des Elektronikgehäuses (2) ausgebildet, und von Gehäuseflächen des Elektronikgehäuses umschlossen ist, und die Schutzkontaktanordnung (20) die Tragschiene (16) federnd kontaktierend gestaltet ist, **dadurch gekennzeichnet,**
**dass** die Schutzkontaktanordnung (20) weiter umfasst
• ein als Messerkontakt ausgebildetes Kontaktteil (22),
• eine auf dem mit einem Rastzapfen (23) versehenen Kontaktteil befestigbare Kontaktklemme (28),
• und ein aus Isolierstoff ausgebildetes, den Rastzapfen (23) und die Kontaktklemme (28) aufnehmendes Kontaktgehäuse (30), und
• **dass** die Schutzkontaktanordnung (20) unabhängig von einer Positionierung des Elektronikgehäuses auf der Tragschiene (16) in den Montageschacht (10) einschiebbar ist, und
• **dass** der Messerkontakt (26) des Kontaktteils (22) auf der Tragschiene federnd zu liegen kommt.

2. System nach Anspruch 1, **dadurch gekennzeichnet, dass** die Schutzkontaktanordnung (20) und der Montageschacht (10) derart ausgebildet sind, dass eine Verschwenkung der Schutzkontaktanordnung (20) um eine parallel zur Schmalseite (6) liegende Achse (DP) möglich ist und eine federnde Belastung und Kontaktierung der Schutzkontaktanordnung mit der Tragschiene über eine im Bodenbereich montierbare Feder (14) erfolgt.

3. System nach Anspruch 2, **dadurch gekennzeichnet, dass** die Feder als Schraubenfeder (14) oder als Blattfeder ausgebildet ist.

4. System nach Anspruch 2 oder 3, **dadurch gekennzeichnet, dass** im Bodenbereich eine als Federkammer ausgebildeter und zur Tragschiene gerichteter Hohlraum (12) vorhanden ist.

5. System nach einem der vorhergehenden Ansprüche, **dadurch gekennzeichnet, dass** das Kontaktteil (22) aus flächigem, leitfähigem Material einstückig mit einer als Rastzapfen (23), zur Aufnahme der Kontaktklemme (28) ausgebildeten Klemmenaufnahme gebildet ist, wobei das flächige Material einerends - am freien Ende des Kontaktteils (22) - einen Messerkontakt (22) und andernends - gegenüber dem Messerkontakt (22) liegend - die Klemmenaufnahme aufweist.

6. System nach Anspruch 5, **dadurch gekennzeichnet, dass** der Rastzapfen (23) in einer Ebene angeordnet ist, die parallel zu der Ebene liegt, in der sich der Messerkontakt (22) erstreckt.

7. System nach einem der vorhergehenden Ansprüche, **dadurch gekennzeichnet, dass** der Messerkontakt (22) eine in Richtung zur Tragschiene ausgebildete Kontaktfläche (26) mit halbkreisförmiger Ausbildung aufweist.

8. System nach Anspruch 1, **dadurch gekennzeichnet, dass** das freie Ende des Kontaktteils (22) gegenüber der Klemmenaufnahme federnd ausgebildet ist.

9. System nach einem der vorhergehenden Ansprüche, **dadurch gekennzeichnet, dass** im Montageschacht (10) Rastelemente vorhanden sind, so dass die Schutzkontaktanordnung (20) in das Elektronikgehäuse (2) verrastbar einschiebbar ist.

10. System nach einem der vorhergehenden Ansprüche, **dadurch gekennzeichnet, dass** das Elektronikgehäuse (2) mehrteilig, insbesondere aus Sockelteil (3) und Oberteil (4) bestehend ausgebildet ist.

11. System nach einem der vorhergehenden Ansprüche, **dadurch gekennzeichnet, dass** der Montageschacht (10) höchstens die Breite eines Drittels der Schmalseite (6) des Elektronikgehäuses (2) hat.

## Claims

1. System, comprising an electronics housing for an electromechanical switching device (2) and a grounding contact arrangement (20),
wherein the electronics housing (2) is configured so as to be placeable on a mounting rail and further comprises
- at least one printed circuit board duct (8) for inserting printed circuit boards,
- connection terminals or plug-in connectors to connect electrical conductors, wherein the connection terminals are electrically connectable to at least one printed circuit board,
- wherein an installation duct (10) is provided in the bottom region of the electronics housing (2) facing the mounting rail (16), the installation duct being accessible from outside the narrow side (6) of the electronics housing (2), and being formed inside the electronics housing (2) and parallel to the at least one printed circuit board duct (8),
wherein the installation duct (10) is formed near to an edge of the longitudinal side of the bottom region of the electronics housing (2), and is enclosed by housing faces of the electronics housing, and the grounding contact arrangement (20) is configured to come to rest on the mounting rail (16) in a resilient manner,
**characterised in that**
the grounding contact arrangement (20) further comprises
- a contact part (22) formed as a blade contact,
- a contact terminal (28) which can be fastened on the contact part provided with a latching pin (23),
- and a contact housing (30) formed of insulating material and configured to receive the latching pin (23) and the contact terminal (28), and
- the grounding contact arrangement (20) can be inserted into the installation duct (10) irrespective of a position of the electronics housing on the mounting rail (16), and
- the blade contact (26) of the contact part (22) is configured to come to rest on the mounting rail in a resilient manner.

2. System according to claim 1, **characterised in that** the grounding contact arrangement (20) and the installation duct (10) are configured such that the grounding contact arrangement (20) can pivot about an axis (DP) that is parallel to the narrow side (6), and a spring (14) that can be installed in the bottom region spring-loads the grounding contact arrangement and causes it to contact the mounting rail.

3. System according to claim 2, **characterised in that** the spring is a helical spring (14) or a leaf spring.

4. System according to claim 2 or 3, **characterised in that** a cavity (12) is formed in the bottom region as a spring chamber and oriented towards the mounting rail.

5. System according to any of the preceding claims, **characterised in that** the contact part (22) is formed of a flat, conductive material, and is integrally formed with a terminal carrier that is formed as a latching pin (23) and is designed to receive the contact terminal (28), wherein the flat material comprises at one end - at the free end of the contact part (22) - a blade contact (22), and comprises at a further end - that is opposite the blade contact (22) - the terminal carrier.

6. System according to claim 5, **characterised in that** the latching pin (23) is arranged in a plane that is parallel to the plane in which the blade contact (22) extends.

7. System according to any of the preceding claims, **characterised in that** the blade contact (22) comprises a semi-circular contact face (26) formed towards the mounting rail.

8. System according to claim 1, **characterised in that** the free end of the contact part (22) is resilient relative to the terminal carrier.

9. System according to any of the preceding claims, **characterised in that** latching elements are provided in the installation duct (10), such that the grounding contact arrangement (20) can be latchably inserted into the electronics housing (2).

10. System according to any of the preceding claims, **characterised in that** the electronics housing (2) comprises two or more parts, in particular a socket part (3) and an upper part (4).

11. System according to any of the preceding claims, **characterised in that** the width of the installation duct (10) is at most a third of the narrow side (6) of the electronics housing (2).

## Revendications

1. Système de boîtier électronique pour un appareil de commutation (2) électromécanique et un agencement de contact de protection (20),
dans lequel le boîtier électronique (2) est conçu de manière à pouvoir être placé sur un rail support et comprend en outre
• au moins un puits de carte de circuits imprimés (8) pour l'insertion de cartes de circuits imprimés,
• des bornes de raccord ou connecteurs à fiches pour le raccordement de conducteurs électriques, dans lequel les bornes de raccord peuvent être reliées électriquement à au moins une carte de circuits imprimés,
• dans lequel un puits de montage (10) accessible par le petit côté (6) du boîtier électronique (2) de l'extérieur, réalisé dans le boîtier électronique (2) et se trouvant parallèle à l'au moins un puits de carte de circuits imprimés (8) est présent dans la zone de fond du boîtier électronique (2) tournée vers le rail support (16),
dans lequel le puits de montage (10) est réalisé de manière proche du bord au niveau du côté longitudinal de la zone de fond du boîtier électronique (2), et est entouré par des surfaces de boîtier du boîtier électronique,
et l'agencement de contact de protection (20) est conçu de manière à toucher sur ressort le rail support (16),
**caractérisé en ce**
**que** l'agencement de contact de protection (20) comprend en outre
• une partie de contact (22) réalisée comme contact à lames,
• une borne de contact (28) pouvant être fixée sur la partie de contact pourvue d'un téton d'encliquetage (23),
• et un boîtier de contact (30) réalisé avec une substance isolante, recevant le téton d'encliquetage (23) et la borne de contact (28),
et
• **que** l'agencement de contact de protection (20) est insérable indépendamment d'un positionnement du boîtier électronique sur le rail support (16) dans le puits de montage (10) et
• **que** le contact à lames (26) de la partie de contact (22) vient se poser sur ressort sur le rail support.

2. Système selon la revendication 1, **caractérisé en ce que** l'agencement de contact de protection (20) et le puits de montage (10) sont réalisés de telle manière qu'un pivotement de l'agencement de contact de protection (20) soit possible autour d'un axe (DP) se trouvant parallèle au petit côté (6) et une sollicitation par ressort et l'établissement de contact de l'agencement de contact de protection avec le rail support soient effectués par le biais d'un ressort (14) pouvant être monté dans la zone de fond.

3. Système selon la revendication 2, **caractérisé en ce que** le ressort est réalisé comme un ressort hélicoïdal (14) ou comme un ressort à lames.

4. Système selon la revendication 2 ou 3, **caractérisé en ce que** dans la zone de fond est présent un espace creux (12) réalisé comme chambre à ressort et dirigé vers le rail support.

5. Système selon l'une quelconque des revendications précédentes, **caractérisé en ce que** la partie de contact (22) est formée en un matériau conducteur plat d'un seul tenant avec un logement de borne réalisé comme téton d'encliquetage (23), pour le logement de la borne de contact (28), dans lequel le matériau plat présente au niveau d'une extrémité - au niveau de l'extrémité libre de la partie de contact (22) - un contact à lames (22) et au niveau de l'autre extrémité - se trouvant en face du contact à lames (22) - le logement de borne.

6. Système selon la revendication 5, **caractérisé en ce que** le téton d'encliquetage (23) est agencé dans un plan qui se trouve parallèle au plan dans lequel le contact à lames (22) s'étend.

7. Système selon l'une quelconque des revendications précédentes, **caractérisé en ce que** le contact à lames (22) présente une surface de contact (26) réalisée en direction du rail support avec une réalisation en forme de demi-cercle.

8. Système selon la revendication 1, **caractérisé en ce que** l'extrémité libre de la partie de contact (22) est réalisée sur ressort par rapport au logement de borne.

9. Système selon l'une quelconque des revendications précédentes, **caractérisé en ce que** des éléments d'encliquetage sont présents dans le puits de montage (10) de sorte que l'agencement de contact de protection (20) puisse être inséré par encliquetage dans le boîtier électronique (2).

10. Système selon l'une quelconque des revendications précédentes, **caractérisé en ce que** le boîtier électronique (2) est réalisé en plusieurs parties, en particulier composé de partie socle (3) et partie supérieure (4).

11. Système selon l'une quelconque des revendications précédentes, **caractérisé en ce que** le puits de montage (10) possède au plus la largeur d'un tiers du petit côté (6) du boîtier électronique (2).
